# DEMANDE DE BREVET EUROPEEN

(11) **EP 2 511 627 A1**
(43) Date de publication de la demande: **17.10.2012**
(21) Numéro de dépôt: 12162246.8
(22) Date de dépôt: 29.03.2012
(51) Int. Cl.: F25B 7/00, F25B 13/00, F25B 30/02, F25B 49/02

(54) **Pompe à chaleur bi-étagée à hautes performances**

(30) Priorité: 11.04.2011 FR 1153147
(71) Demandeur: AJ-Tech, 44350 Guérande (FR)
(72) Inventeur: Gatto, Vincent, 85320 La Bretonniere-la Claye (FR); Noble, Bertrand, 44260 Prinquiau (FR); Babin, Hilaire, 44380 Pornichet (FR); Ernaut, Samuel, 44780 Missillac (FR); Maheux, Patrick, 44350 Guerande (FR)
(74) Mandataire: Kurtz, Laurent Charles Edmond

(57) **Abrégé**

Pompe à chaleur et procédé de fonctionnement, comportant deux circuits montés en cascade, un premier des deux circuits comportant successivement un compresseur (1), un premier dispositif d'échange de chaleur (2) formant condenseur pour ce premier circuit, un deuxième dispositif d'échange de chaleur (4) formant condenseur pour ce premier circuit, un premier dispositif de détente (5) et un troisième dispositif d'échange de chaleur (6) formant évaporateur pour le premier circuit , et le second des deux circuits comportant successivement un compresseur (7), un premier dispositif d'échange de chaleur (8) formant condenseur pour ce second circuit, un dispositif de détente (9) et ledit deuxième dispositif d'échange de chaleur (4), formant évaporateur pour ce second circuit, **caractérisé en ce qu'**un second dispositif de détente (3) est interposé entre le premier dispositif d'échange de chaleur (2) et le deuxième dispositif d'échange de chaleur du premier circuit (4).

## Description

### Domaine technique

La présente invention concerne une pompe à chaleur bi-étagée (ou cascade à compression de gaz avec changement de phase.

### Etat de la technique

Les pompes à chaleur sont utilisées depuis longtemps pour le chauffage résidentiel. Le principe de base des pompes à chaleur à compression de gaz avec changement de phase est d'extraire l'énergie de l'air extérieur (ou toute autre source froide, telle que l'eau) pour la restituer à l'air ambiant de l'habitation via par exemple le réseau hydraulique de chauffage. Ce transfert d'énergie de l'air extérieur (source froide) vers l'ambiance de l'habitation (source chaude, c'est-à-dire un milieu à température supérieure à celle de la source froide qui est, en fait, la source de chaleur ; on devrait donc plutôt parler de puits de chaleur ou de puits chaud) est rendu possible grâce au travail d'un compresseur, celui-ci étant couplé classiquement à trois autres composants qui sont : le condenseur, le détendeur et l'évaporateur. L'amplitude du cycle frigorifique s'y rapportant dans le diagramme enthalpique dépend essentiellement des pressions d'évaporation et de condensation en lien avec la température de la source froide (évaporation, côté basse pression) et la température de l'eau du réseau de chauffage (condensation, côté haute pression). A noter que la chaleur fournie à l'habitation *Qc* est la somme de l'énergie extraite à l'air extérieur *Qf* et d'une partie de l'énergie *W* fournie au compresseur, celle-ci dépendant de son rendement global. La performance du système est définie par le COP qui est le rapport entre la chaleur fournie à l'habitation et l'énergie fournie au compresseur.

On rappellera également que pour un mélange diphasique (gaz liquide), il existe une relation entre la pression et la température.

Par ailleurs, les échanges de chaleur dans l'évaporateur et le condenseur se faisant d'une manière irréversible, c'est-à-dire en nécessitant des différences de température, il en résulte que :
- la température effective d'évaporation de fluide frigorigène doit être inférieure à la température du milieu à refroidir ; et
- la température effective de condensation de fluide frigorigène circulant du côté du condenseur doit être supérieure à la température du fluide de refroidissement (air, eau) de la source chaude.

L'un des inconvénients de ces systèmes concerne la diminution de leur puissance et de leur performance lorsque la température de la source froide (température extérieure par exemple) diminue et/ou lorsque la température de la source chaude (eau par exemple) augmente. Les principales raisons de ces chutes de puissance et de performance sont liées à la diminution :
- de la densité du gaz à l'aspiration du compresseur côté basse pression.
- de la chaleur latente de condensation côté haute pression.
- du rendement isentropique et volumétrique du compresseur lorsque les taux de compression augmentent.

En effet, la température extérieure et la pression d'évaporation étant couplées, la diminution de la température extérieure entraîne une diminution de la densité du gaz aspiré par le compresseur provoquant une réduction du débit massique et de la puissance du système. Le travail du compresseur ne variant que très peu (augmentation du travail unitaire mais réduction du débit massique), le COP du système va diminuer.

Lorsque la température d'eau augmente deux phénomènes provoquent la réduction du COP et de la puissance du système. D'une part, la pression de condensation augmentant avec la température, le travail que doit fournir le compresseur est plus important pour un même débit. D'autre part, la chaleur latente (largeur de la courbe de saturation sur le diagramme enthalpique) diminuant avec l'augmentation de la pression, la puissance du système va également diminuer. Ce dernier phénomène restant néanmoins plus ou moins important en fonction du niveau où l'on se situe sur la courbe de saturation et de la nature du gaz utilisé.

On peut ajouter un autre phénomène impactant la puissance et le COP du système. L'augmentation du taux de compression entraîne une augmentation des contraintes mécaniques dans le compresseur provoquant une augmentation des irréversibilités, favorisant les fuites internes et augmentant l'impact des volumes morts. Concrètement, il apparaît une dégradation importante du rendement isentropique et volumétrique du compresseur lorsque le taux de compression augmente au-delà de 3.5 avec pour conséquence une augmentation du travail du compresseur par rapport au travail théorique et une réduction de son débit de réfrigérant.

Un autre inconvénient de ces systèmes concerne leurs limites de fonctionnement liées essentiellement à la température des gaz de refoulement. Cette température ne doit pas dépasser 120 à 140 °C et est en pratique limitée entre 110 à 115°C en raison des problématiques qu'elle pose sur les huiles utilisées dans les compresseurs (baisse de la viscosité, dégradation). La température de refoulement du compresseur dépend et augmente en fonction de plusieurs paramètres qui sont le coefficient polytropique, le taux de compression et la température d'aspiration. En pratique en fonction du taux de compression et des réfrigérants utilisés, cette température est de 15 à 50 °C au dessus de la température de condensation. Ainsi une température de condensation de 65°C ne sera pas possible au-delà d'un certain taux de compression et donc jusqu'à une certaine température extérieure (dépendant du réfrigérant et du compresseur).

On peut regrouper les pompes à chaleur en trois grandes catégories en fonction des émetteurs de l'habitation :
- les pompes à chaleur basse température utilisées pour le chauffage par plancher chauffant. L'émetteur ayant une grande surface d'échange la température nécessaire dépasse rarement 40°C et tourne en moyenne autour de 35°C. Ces pompes à chaleur fonctionnent sur de faibles différentiels température de condensation/ température d'évaporation.
- les pompes à chaleur moyenne température utilisées sur les ventilo-convecteurs et les radiateurs basse température avec des températures d'eau de l'ordre de 40 à 55°C. Ces pompes à chaleur fonctionnent sur des différentiels température de condensation/ température d'évaporation moyens.
- les pompes à chaleur haute température fonctionnant sur des radiateurs ou pour la préparation de l'eau chaude sanitaire avec des températures d'eau de l'ordre de 55 à 80°C. Ces pompes à chaleur fonctionnent sur de forts différentiels température de condensation/ température d'évaporation.

La conception de pompes à chaleur basse température ne présente pas de difficulté particulière.

Il en est tout autrement pour une pompe à chaleur destinée à la haute température. En effet, comme vu supra, l'augmentation de la pression de condensation entraîne une diminution de la puissance, de la performance, une augmentation du taux de compression et de la température de refoulement. Ceci limite la température d'évaporation possible. Pour pallier à ces difficultés il existe différentes technologies, les plus répandues sont entre autres : les systèmes avec injection, les systèmes fonctionnant au CO₂ transcritique (frigorigène) ou encore les systèmes cascades.

Plus particulièrement, les systèmes cascades utilisent schématiquement plusieurs pompes à chaleur (étage) en série, chaque étage fonctionnant avec un réfrigérant identique ou différent. Ces systèmes peuvent atteindre des températures de 80°C voire au dessus pour des températures d'évaporation de -20°C, cela en fonction du nombre d'étages et des réfrigérants utilisés. Les performances de ces systèmes cascades sont bien supérieures à celles des systèmes simples étages et même des systèmes à injection notamment pour les forts différentiels température de condensation/ température d'évaporation. Lorsque ce différentiel devient moins important ces systèmes conservent leurs performances mais sous condition d'un dimensionnement entre les cylindrées des compresseurs bien définis. Ils restent néanmoins moins adaptés que les systèmes simple étage pour les faibles différentiels pour des raisons développées ci-après. Un autre inconvénient de ces systèmes est leur coût élevé ; c'est la raison pour laquelle le nombre d'étages reste en pratique limité à deux.

Un système cascade bi-étagé classique est composé de deux pompes à chaleur en série reliées entre elles par un échangeur intermédiaire ou évapo-condenseur. Dans ces systèmes la chaleur fournie à l'habitation est la somme de la chaleur extraite de la source froide et d'une partie du travail fourni par chaque compresseur.

L'intérêt majeur de ces systèmes est de permettre de réduire les températures de refoulement pour les fonctionnements avec un fort différentiel température de condensation/ température d'évaporation et d'améliorer le COP par rapport à un système traditionnel. En effet, les taux de compression de chaque compresseur étant bien inférieur à celui d'un système simple étage, leur température de refoulement et notamment celle du compresseur du deuxième étage en contact avec la source chaude sera plus faible. De plus, le rendement isentropique de chacun des compresseurs, lié encore une fois au taux de compression, sera plus élevé entraînant un rendement du système plus important.

Comme vu, les performances des systèmes bi-étagés restent moins intéressantes que celles des systèmes simple étage pour les faibles différentiels température de condensation/température d'évaporation. Deux raisons expliquent cette perte de performance : le rendement isentropique des compresseurs et le dimensionnement entre les deux compresseurs. Les rendements isentropiques sont optimums pour des taux de compression entre 2.5 et 3.5, ils chutent de façon importante au dessus de ces valeurs et de façon plus faible en deçà. Lors des fonctionnements à faible différentiel température de condensation/ température d'évaporation les compresseurs travaillent en dessous de ces taux. De plus, pour chaque condition de température de la source chaude et de la source froide et en fonction des gaz utilisés il existe un ratio optimum entre les cylindrées des compresseurs. Ce ratio peut varier de 1 à 2 entre un fonctionnement à fort différentiel condensation/évaporation et un fonctionnement à faible différentiel. Pour pallier à ces problèmes de dimensionnement certains systèmes utilisent des compresseurs associés à des électroniques de puissance qui permettent de faire varier la vitesse de chaque compresseur. Cette méthode n'est néanmoins pas satisfaisante car le gain apporté par l'optimisation des débits massiques de chaque circuit est atténué par la surconsommation de l'électronique de puissance, celle-ci pouvant représenter de 5 à 8 % de la puissance du compresseur.

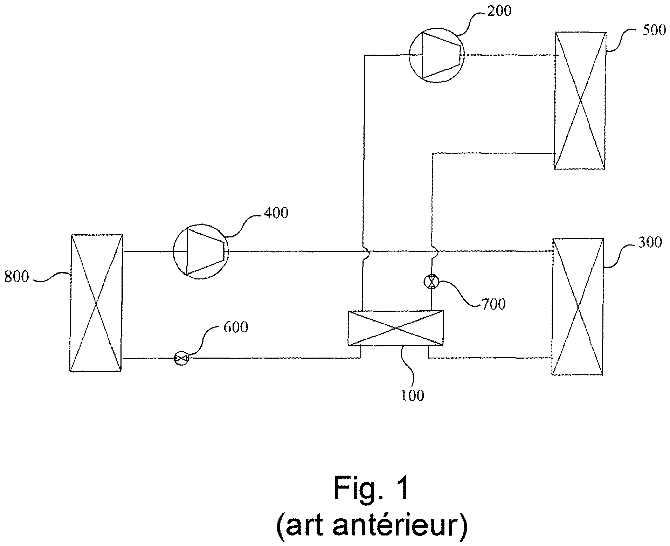

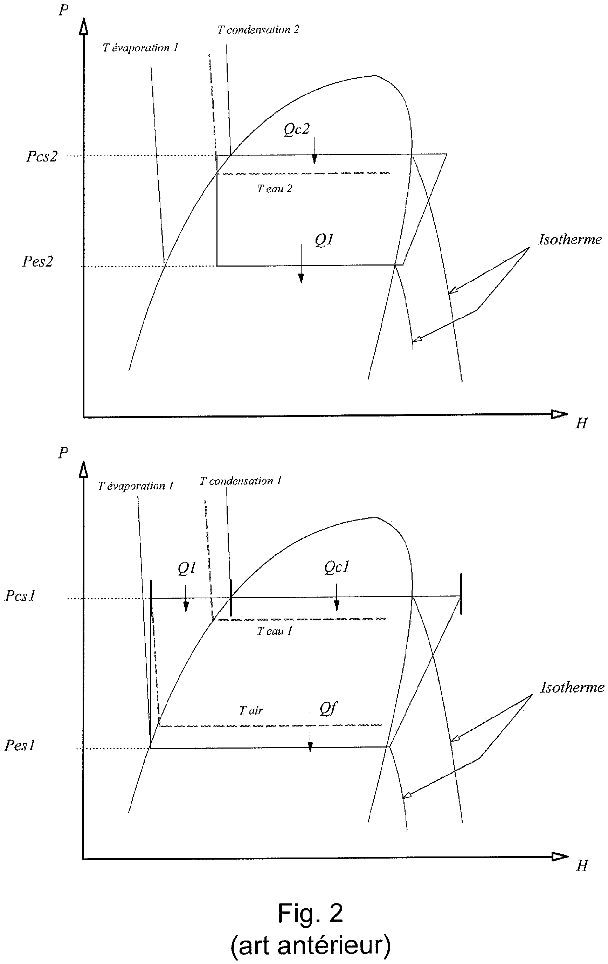

La demande de brevet EP 0069756 propose un système semi-étagé avec deux étages montés en cascade par un échangeur commun 100 - évapo-condenseur- et comportant chacun un compresseur 200, 400, un échangeur condenseur 300, 500 et un détendeur 600, 700 , le premier étage comportant en outre un évaporateur 800, tel que représenté sur la figure 1. Les diagrammes enthalpiques s'y rapportant sont représentés Figure 2. Le but de ce système est d'utiliser l'énergie de sous-refroidissement *Q₁* du premier étage comme source d'énergie pour une seconde pompe à chaleur. Cet agencement présente en théorie de nombreux avantages. Tout d'abord il devrait permettre de chauffer deux sources chaudes à des températures différentes. Il devrait permettre également un fonctionnement soit en simple étage ou soit bi-étagé.

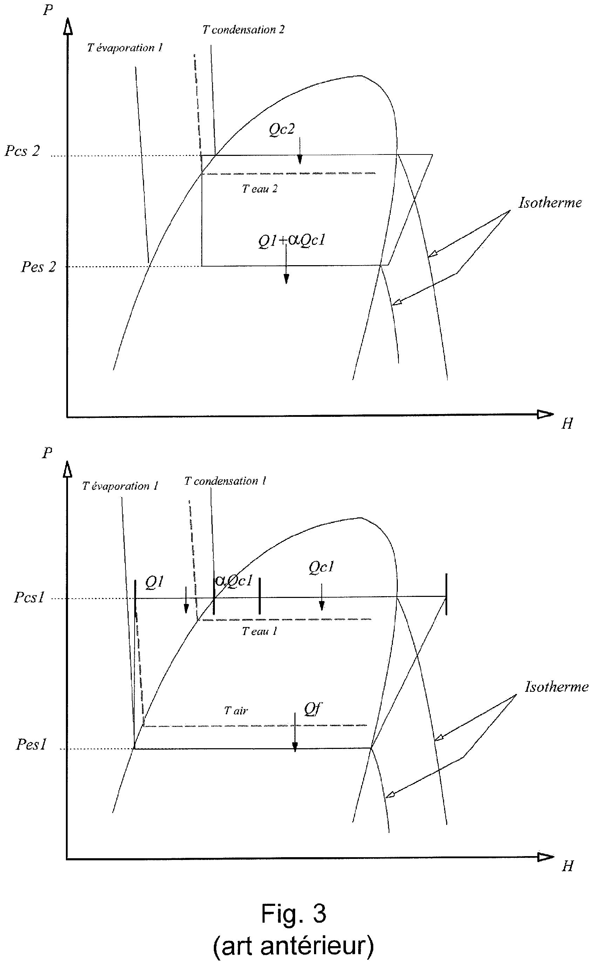

De plus lorsque ces mêmes sources ont des températures identiques, l'invention décrite permettrait d'obtenir de meilleures performances en comparaison avec un système classique. En effet dans ce mode de fonctionnement, le travail fourni par le compresseur du premier étage est identique à un système simple étage mais pour une quantité d'énergie extraite à la source froide plus importante. La quantité d'énergie *Q*1 est en quelque sorte « gratuite ». Le second compresseur, qui utilise cette énergie *Q1* extraite du sous-refroidissement du premier étage, travaille avec une température d'évaporation supérieure à ce dernier et il en résulte une amélioration du COP global et une puissance du système plus importante. Dans le cas où le système utilise un réfrigérant différent pour chaque étage, la température d'évaporation du second compresseur doit être de telle sorte que son COP soit supérieur à celui du premier compresseur. Si ce n'est pas le cas un tel système développera une puissance plus importante pour des performances inférieures aux systèmes classiques. De même si le second compresseur est trop puissant (sans tenir compte des problématiques de dimensionnement d'échangeur qui seront discutées ci-dessous) par rapport à l'énergie de sous-refroidissement disponible, une quantité supplémentaire α*Qc1* (α compris entre 0 et 1) va être extraite par le second étage sur le premier étage, et cela au détriment de l'énergie transmise directement par le premier étage à la source chaude. Sur la Figure 3, on comprend que cette quantité d'énergie α*Qc*1 est transmise à la source chaude par le travail des deux compresseurs alors qu'elle ne l'était précédemment que par le travail du premier compresseur. Il en résulte pour ce type de fonctionnement une diminution du rendement du système semi-étagé voire une dégradation de celui-ci par rapport à un système simple étage. On peut montrer qu'il existe un αₘₐₓ tel que lorsque α=αₘₐₓ le rendement du système est égal à celui du système simple étage mais pour une puissance augmentée de *Q1.* Au-delà de αₘₐₓ, la puissance est augmentée mais le rendement du système est inférieure à un système simple étage.

Ainsi, malgré ces avantages le système décrit dans la demande brevet EP 0069756 reste dans la pratique limité et n'est pas réellement adapté à fonctionner en double étage tout au moins avec toute la puissance du système. Suivant l'installation décrite dans ce document, l'échangeur 100 et surtout le compresseur du second étage 200 doivent être dimensionnés pour ne transmettre et n'utiliser que l'énergie de sous-refroidissement, celle-ci ne représentant que 10 à 30 % de l'énergie de désurchauffe et de condensation du premier étage. Pour faire fonctionner un tel système en double étage pour une application haute température, il suffit de couper la pompe du circuit hydraulique monté en relation avec l'échangeur condenseur 300 du premier étage et de transférer toute la puissance du premier au second étage mais à travers un échangeur 100 dimensionné pour 30 % de cette puissance. La conséquence est une forte dégradation des performances du système avec une augmentation de l'écart entre la température de condensation du premier étage et la température d'évaporation du second étage.

Dans le cas d'un surdimensionnement de l'échangeur 100, on va reporter le problème au fonctionnement en mode semi-étagé en diminuant la pression de condensation P*cs1* (pression de condensation du premier étage, *Pes1* étant la pression d'évaporation du premier étage, les grandeurs caractéristiques Pe, Pc, Qc du second étage étant elles affectées du chiffre «2» les isothermes de températures d'évaporation, de condensation ainsi que des températures d'air et d'eau, s'agissant d'un exemple pour une pompe à chaleur de type air/eau, étant également représentées sur les figures correspondantes pour chacun des étages, en traits pleins ou pointillés), avec pour conséquence, comme on l'a vu, une diminution de l'énergie *Qc1* transférée au réseau de chauffage à travers l'échangeur 300 d'une quantité α*Qc1* au profit de celle transmise au second circuit via l'échangeur 100.

Au vu des différentes technologies et de leurs limites la présente invention a pour objet de proposer une pompe à chaleur alliant les avantages des systèmes simple étage et bi-étagés, tout en résolvant les problèmes posés par les systèmes semi-étagés. Comme on l'a démontré, l'amélioration des performances apportées par les fonctionnements en mode semi-étagé n'est possible qu'en maîtrisant parfaitement la quantité d'énergie extraite par le second étage sur l'énergie de sous-refroidissement du premier étage.

### Exposé de l'invention

La présente invention propose, à cet effet, une pompe à chaleur comportant deux circuits montés en cascade, un premier des deux circuits comportant successivement un compresseur, un premier dispositif d'échange de chaleur formant condenseur pour ce premier circuit, un deuxième dispositif d'échange de chaleur formant condenseur pour ce premier circuit, un premier dispositif de détente et un troisième dispositif d'échange de chaleur formant évaporateur pour le premier circuit , et le second des deux circuits comportant successivement un compresseur, un premier dispositif d'échange de chaleur formant condenseur pour ce second circuit, un dispositif de détente et ledit deuxième dispositif d'échange de chaleur, formant évaporateur pour ce second circuit, un second dispositif de détente étant interposé entre le premier dispositif d'échange de chaleur et le deuxième dispositif d'échange de chaleur du premier circuit .

La présente invention apporte ainsi une solution technique pour maîtriser la quantité d'énergie extraite par le second étage et assurer des performances optimales. Elle se traduit concrètement par une pompe à chaleur capable de développer une puissance calorifique plus importante pour des performances équivalentes voire supérieures aux systèmes conventionnels (simple étage, double étage ou injection). Cette pompe à chaleur s'appuie pour ce faire sur sa conception bi-étagée pour fonctionner dans un mode que nous appellerons semi-étagé et qui permet d'atteindre des performances supérieures aux systèmes actuels à moyenne et basses températures tout en conservant les bonnes performances en haute température de condensation.

En pratique, cette pompe à chaleur est capable de maintenir sa puissance calorifique même pour des températures d'évaporation allant jusqu'à -15°C.

Elle est destinée, par exemple, à produire de l'eau chaude à haute température (typiquement 80°C) pour le chauffage ou l'eau chaude sanitaire.

Suivant des dispositions particulières, éventuellement combinées et mises en oeuvre notamment pour des raisons de commodité de fabrication et /ou d'efficacité de fonctionnement :
- le second dispositif de détente est un détendeur à commande électronique.
- le détendeur est actionné par un moteur pas à pas.
- la pompe comporte des moyens de commande reliés fonctionnellement au second dispositif de détente pour en régler le degré d'ouverture.
- les moyens de commande sont reliés fonctionnellement à un capteur de pression agencé sur le premier circuit entre le compresseur et le premier dispositif d'échange de chaleur ou une sonde de température agencée dans le premier dispositif d'échange de chaleur, une sonde de température agencée sur le premier circuit entre le premier dispositif d'échange de chaleur et le second dispositif de détente et un capteur de pression agencé sur le second circuit entre le deuxième dispositif d'échange de chaleur et le compresseur.
- le premier dispositif d'échange de chaleur de chacun des circuits est en contact avec une source chaude respective et les moyens de commande sont reliés fonctionnellement à un élément de commande de puissance de chacune des deux sources chaudes.
- les moyens de commande sont reliés fonctionnellement au premier dispositif de détente pour en régler le degré d'ouverture.
- les moyens de commande sont en outre reliés fonctionnellement aux compresseurs et adaptés à assurer le fonctionnement sélectif de la pompe dans un mode de fonctionnement simple étage, semi-étagé ou bi-étagé.
- les moyens de commande comportent un microcontrôleur.
- le premier circuit comporte un passage de dérivation muni d'une électrovanne et dans lequel le fluide caloporteur de ce circuit circule lorsque l'électrovanne est ouverte pour contourner le premier dispositif d'échange de chaleur et le second dispositif de détente de ce premier circuit.
- le premier circuit comporte une vanne quatre voies raccordée fluidiquement entre le compresseur et le premier dispositif d'échange de chaleur, de telle manière à pouvoir, par changement de la position de la vanne quatre voies, modifier le sens de circulation du fluide caloporteur.
- un fluide caloporteur de type frigorigène circule dans chaque circuit.
- le fluide caloporteur du premier circuit est le R410A et le fluide caloporteur du second circuit est le R134a.
- le compresseur du premier circuit est à vitesse variable, tandis que le compresseur du second circuit est à vitesse fixe.
- la pompe à chaleur est de type air / eau.

La présente invention propose également un procédé de fonctionnement d'une telle pompe à chaleur et assurant le fonctionnement sélectif de cette pompe dans un mode de fonctionnement simple étage, sem-étagé ou bi-étagé selon lesquels :
- (i) lors du fonctionnement en mode simple étage, le compresseur du premier circuit est en fonctionnement et le compresseur du second circuit est à l'arrêt et le second dispositif de détente du premier circuit est au moins partiellement ouvert,
- (ii) lors du fonctionnement en mode bi-étagé, chacun des compresseurs des premier et second circuits est en fonctionnement et le second dispositif de détente est ouvert complètement ;et
- (iii) lors d'un fonctionnement en mode semi-étagé, chacun des compresseurs des premier et second circuits est en fonctionnement et le second dispositif du premier circuit est commandé en ouverture de telle sorte que l'énergie extraite du premier circuit par le second circuit ne correspond qu'à une énergie de sous-refroidissement lorsque la pompe alimente une seule source chaude ou en fonction des besoins en puissance respectifs de deux sources chaudes, en contact chacune avec l'un ou l'autre du premier dispositif d'échange de chaleur du premier circuit ou du premier dispositif d'échange de chaleur du second circuit.

Avantageusement, lors du fonctionnement selon le mode (iii) avec une seule source de chaleur, le degré d'ouverture du premier dispositif de détente du premier circuit est réglé de telle sorte que le fluide y circulant soit totalement évaporé avant d'être aspiré par le compresseur de ce premier circuit.

### Brève description des dessins

La présente invention va à présent être décrite plus en détail, en référence aux figures annexées, pour lesquelles :
La figure 1 est un schéma de la pompe à chaleur bi-étagée décrite dans la demande de brevet EP 0069756. Comme indiqué ci-dessus, cette pompe à chaleur intègre sur le premier circuit un condenseur en amont de l'évapo-condenseur, par rapport à une pompe à chaleur bi-étagée classique.
La figure 2 représente les cycles thermodynamiques dans leurs diagrammes enthalpiques des deux circuits de la pompe à chaleur bi-étagée décrite dans cette demande de brevet EP 0069756.
La figure 3 représente les cycles thermodynamiques dans leurs diagrammes enthalpiques des deux circuits de la pompe à chaleur bi-étagée décrite dans la demande de brevet EP 0069756 lorsque les compresseurs sont de puissance équivalente.
Les figures 4A et 4B sont des schémas d'un premier mode de réalisation de la présente invention décrit plus en détail ci-dessous.
La figure 5 représente les cycles thermodynamiques dans leurs diagrammes enthalpiques des deux circuits de la pompe à chaleur bi-étagée de la présente invention. Elle met en évidence le rôle du détendeur pour contrôler la puissance du deuxième étage en mode semi-étagé. A noter que la terminologie utilisée pour les courbes et grandeurs de cette figure et de la suivante est basée sur celle des figures 2 et 3.
La figure 6 représente les cycles thermodynamiques dans leurs diagrammes enthalpiques des deux circuits de la pompe à chaleur bi-étagée de la présente invention sur deux sources chaudes à la même température, en mode semi-étagé. Elle met en évidence le rôle du détendeur conforme à l'invention pour augmenter la puissance sur la source en contact thermique avec l'échangeur condenseur du second circuit et plus particulièrement quand les deux sources chaudes sont à des températures différentes.
La figure 7 est un schéma d'un autre mode de réalisation de la présente invention, plus particulièrement adapté pour les pompes à chaleur de type air/eau.

### Description des modes de réalisation

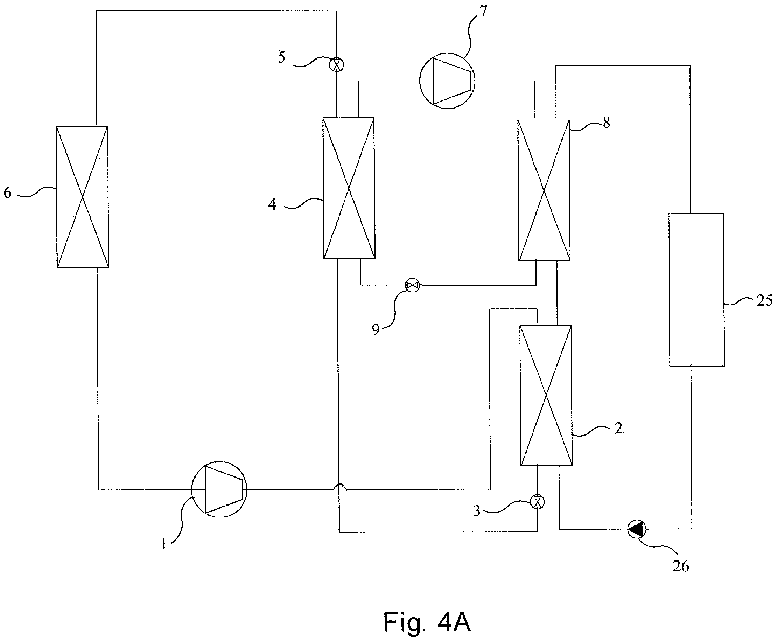

Comme représenté sur la figure 4A, la présente invention comporte suivant un premier mode de réalisation une pompe à chaleur selon :
- un premier circuit comprenant en série les éléments suivants : un compresseur 1, un premier échangeur (ou condenseur) 2, un premier détendeur 3, un deuxième échangeur (ou évapo-condenseur) 4, un second détendeur 5 et un troisième échangeur (ou évaporateur) 6. Ce premier circuit est en contact thermique avec la source chaude 25 (le réseau de chauffage par exemple) via l'échangeur 2 et avec une source froide (air extérieur, source géothermique) via l'échangeur 6 ainsi qu'avec un second circuit via l'échangeur 4 ; et
- ce second circuit comprenant en série les éléments suivants : un compresseur 7, un premier échangeur (ou condenseur) 8, un détendeur 9 et le second échangeur (ou évapo-condenseur) 4. Ce deuxième circuit est également en contact thermique avec la source chaude 25 via l'échangeur 8 et avec le premier circuit via l'échangeur 4.

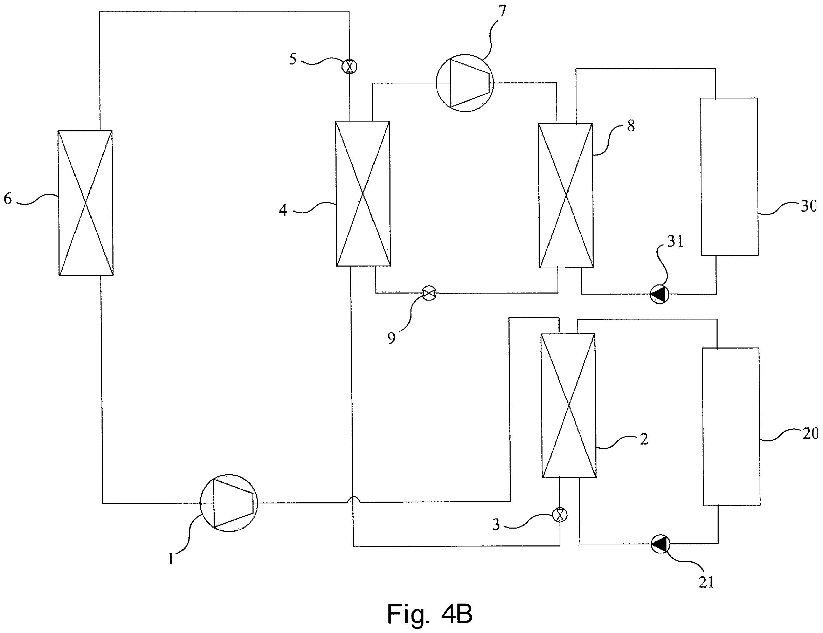

Un circulateur 26 est, par ailleurs, prévu pour faire circuler l'eau du réseau de chauffage à travers les échangeurs 2 et 8.
Contrairement aux détendeurs 5 et 9 qui peuvent être indifféremment de type thermostatique ou électronique, le détendeur 3 est ici de type électronique actionné par exemple par un moteur pas à pas. La commande du taux (degré) d'ouverture de ce détendeur est faite, ici, par l'intermédiaire d'un microcontrôleur et à partir des mesures faites par différents capteurs de pression et de température. Ces capteurs non représentés sur les figures sont, dans le cas du présent mode de réalisation : un capteur de pression d'évaporation positionné entre l'échangeur 4 et le compresseur 7 (mesure de P*ₑₛ₂*), d'un capteur de pression de condensation positionné entre le compresseur 1 et l'échangeur 2 (mesure de P*_{cs1}*) et d'une sonde de température positionnée entre l'échangeur 2 et le détendeur 3. A noter que le capteur de pression utilisé pour déterminer la température de condensation par la mesure de P*_{cs1}* pourrait être remplacé par une sonde de température placée par exemple au milieu de l'échangeur (technique souvent utilisée dans les applications air/air).
A noter que la source chaude peut aussi être composée de deux sources chaudes (figure 4B). Une source chaude 20 (plancher chauffant par exemple) est en contact avec le premier circuit via l'échangeur 2, avec mise en oeuvre d'un circulateur 21. Une seconde source chaude 30 à une température potentiellement plus haute que la source 20 (par exemple, deuxième plancher chauffant, ventilo-radiateur, radiateur ou ballon d'eau chaude sanitaire) est en contact avec le premier circuit via l'échangeur 8 avec mise en oeuvre et un circulateur 31.

Les compresseurs 1 et 7 sont, en pratique, à vitesse fixe ou à vitesse variable sur les deux étages.

Un fluide caloporteur circule dans chaque circuit. Ce fluide peut être de même nature ou de nature différente pour chaque circuit. De préférence, ces fluides sont de type frigorigène.

Dans ce mode de réalisation, la présente invention extrait la chaleur de la source froide via l'échangeur 6 pour la restituer à la source chaude via l'échangeur 2 et/ou l'échangeur 8 et cela en fonction des modes de fonctionnement les plus adaptés pour assurer le meilleur rendement et maintenir la puissance calorifique quelles que soient les températures de la source chaude et de la source froide.

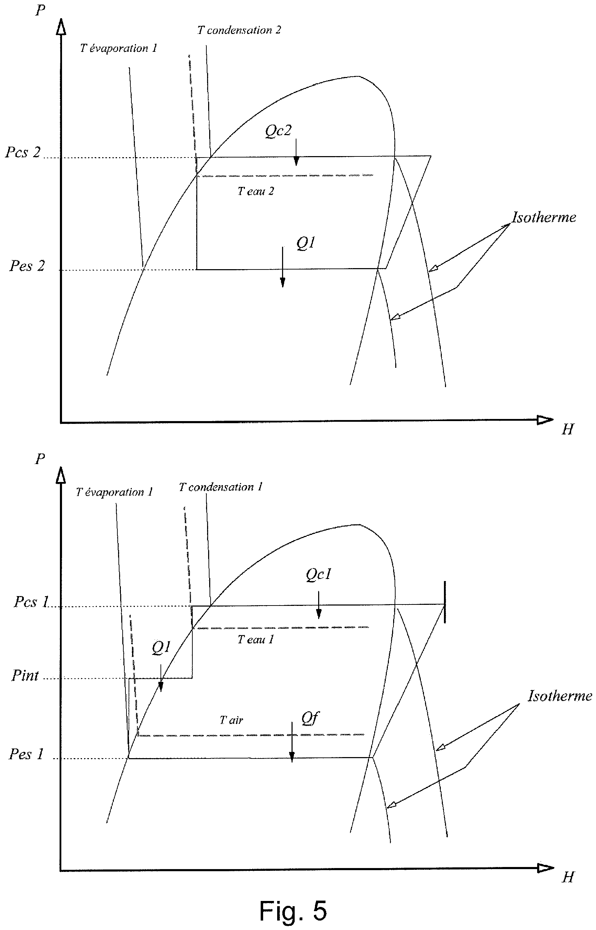

Ces différents modes de fonctionnement sont en pratique les suivants :
- le mode simple étage, ce mode étant particulièrement adapté pour les faibles différentiels température de condensation/température d'évaporation ;
- le mode bi-étagé, selon lequel la chaleur extraite de la source froide est d'abord transférée au second circuit via l'échangeur 4 pour être ensuite transférée à la seconde source chaude via l'échangeur 8. Ce mode est particulièrement adapté pour les forts différentiels température de condensation/ température d'évaporation.
- le mode semi-étagé, selon lequel la chaleur extraite de la source froide est transférée pour partie directement à la source chaude 25 via l'échangeur 2. L'autre partie est d'abord transférée au second circuit via l'échangeur 4 pour être ensuite transférée à la source chaude 25 via l'échangeur 8. Dans la pratique la quantité d'énergie transférée à la source chaude via l'échangeur 2 correspond à l'énergie de désurchauffe et de condensation du fluide du premier circuit, Q*c1* (voir figure 5). La quantité transférée via l'échangeur 8 correspond quant à elle strictement à une énergie de sous-refroidissement *Q1* et cela grâce au détendeur 3. En effet, ce détendeur 3 permet, quelles que soient les conditions de température de la source chaude et de la source froide, de découpler les pressions dans l'échangeur 2 et dans l'échangeur 4 et donc les conditions thermiques. Pour cela le détendeur 3 prend en compte deux critères à travers la mesure de la pression *Pₑₛ₂* (pression d'évaporation du deuxième circuit dans l'échangeur 4), de la température en sortie du condenseur 2 et de la pression de condensation *P_{cs1}* : maintenir un sous-refroidissement en sortie de l'échangeur 2 tout en assurant une pression *Pₑₛ₂* minimum et en cohérence avec l'énergie de sous-refroidissement *Q1* et la pression d'évaporation du compresseur 7 correspondant à cette énergie.
- le mode semi-étagé sur deux sources chaudes (exemple de la figure 4B). Dans ce mode de réalisation dérivé, les échangeurs 2 et 8 sont en contact avec deux sources chaudes qui peuvent être à des températures identiques ou différentes. Ces deux sources peuvent avoir des besoins de puissance différents. Le détendeur 3 permet d'ajuster la répartition de puissance sur les deux échangeurs 2 et 4 et donc entre la source chaude sur l'échangeur 2 et celle sur l'échangeur 8. Dans le cas où les deux sources chaudes sont à des températures différentes ce mode est particulièrement adapté en comparaison des systèmes actuels qui travaillent à la température de la source la plus chaude (vanne mélangeuse, bouteille de mélange).

Le mode de fonctionnement de la présente invention est déterminé à partir des températures de la source chaude et de la source froide.

Le tableau I ci-dessous montre un exemple de paramétrage de ces modes avec un échangeur 6 de type évaporateur à air et des échangeurs 8 et 2 de type condenseur à eau (application air/eau). Ce paramétrage est donné ici à titre indicatif et il est notamment plus approprié pour utiliser comme réfrigérant le R410A au premier étage et le R134a au second étage.

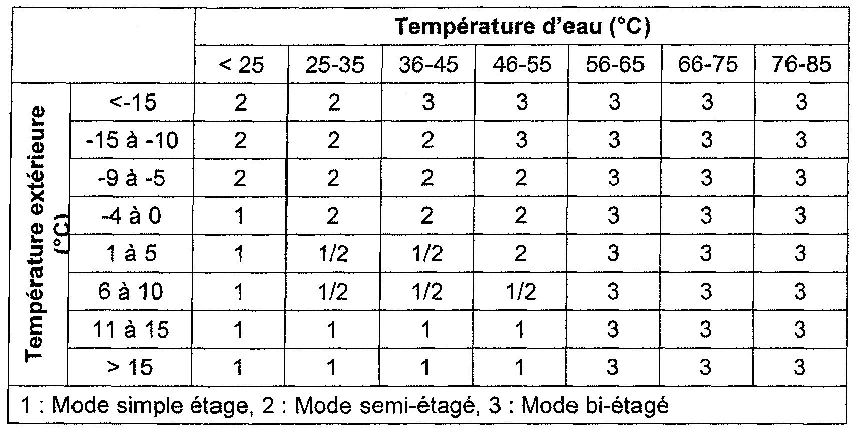

Lors du fonctionnement en simple étage le compresseur 1 est en fonctionnement et le compresseur 7 est à l'arrêt. Dans ce mode, la chaleur extraite de la source froide est restituée uniquement à la première source chaude via l'échangeur 2. Les détendeurs 5 et 3 gèrent les conditions d'évaporation et de condensation, le détendeur 3 permettant d'assurer un bon remplissage et un bon sous-refroidissement sur le condenseur 2 et de dissiper toute la puissance potentielle.

Lors du fonctionnement en mode bi-étagé, le détendeur 3 est ouvert complètement et les deux compresseurs sont en fonctionnement. La chaleur extraite de la source froide est d'abord transférée au second circuit via l'échangeur 4 pour être ensuite transférée à la seconde source chaude via l'échangeur 8. Dans une pompe à chaleur présentant plusieurs sources chaudes, sauf à noyer les condenseurs, la pression de condensation est imposée par la source présentant la meilleure condition de troisième espèce (ou condition thermique) dans laquelle intervient le coefficient de transfert thermique et la température du puits de chaleur. Dans le cas où les deux sources chaudes échangent via des échangeurs de même puissance la pression de condensation sera imposée par la source chaude la plus froide. Ainsi dans ce mode, la pression de condensation du premier étage est imposée par le compresseur du second étage puisque celui-ci induit une température d'évaporation bien inférieure à la température de la source chaude. Il n'y aura ainsi pratiquement pas de transfert de chaleur dans l'échangeur 2.

En mode semi-étagé, les deux compresseurs sont en fonctionnement et le taux d'ouverture des détendeurs 5 et 3 est commandé par le microcontrôleur précité de telle sorte que l'énergie *Q1* soit extraite du premier étage par le second étage pour assurer un rendement optimum. Dans le cas d'une seule source de chaleur, le rendement est optimum si deux conditions sont respectées, ces deux conditions sont :
- que *Q1* ne doit correspondre qu'à une énergie de sous-refroidissement
- que la température d'évaporation du fluide frigorigène dans le compresseur 7 soit de telle sorte que le rendement de ce compresseur soit supérieur à celui du compresseur 1.

Le détendeur 3 va permettre de respecter ces deux conditions en découplant les pressions/températures de condensation dans l'échangeur 2 et dans l'échangeur 4 et de contrôler la pression d'évaporation du deuxième étage dans l'échangeur 4, c'est-à-dire de contrôler la puissance du compresseur 7. En l'absence de ce détendeur, le système fonctionne naturellement comme un bi-étagé. En effet, sans ce détendeur la pression/température de condensation est identique dans les deux échangeurs et est imposée par la meilleure des conditions thermiques. La température d'évaporation du deuxième étage qui est par nature bien inférieure à celle de la température d'eau, et les échangeurs étant de même puissance, la pression/température de condensation du premier étage est imposée par la source chaude la plus froide (inférieure à la température d'eau), comme on l'a vu et il ne peut donc pas avoir de transfert de chaleur dans l'échangeur 2.

En agissant sur le détendeur 3 à partir de la mesure de la température en sortie du condenseur 2 et des pressions *Pₑₛ₂* et *P_{cs1},* on va ajuster la pression d'aspiration du compresseur 7 de telle sorte que sa puissance froid corresponde à celle du sous-refroidissement du circuit du premier étage tout en s'assurant que le rendement du compresseur 7 soit supérieur à celui du compresseur 1 et cela quels que soient les niveaux de températures. Concrètement, à partir de la cylindrée des deux compresseurs, la pression d'évaporation du deuxième étage cible est calculée et prédéterminée en fonction des températures de condensation et d'évaporation du premier étage. Pour obtenir cette pression d'évaporation du deuxième étage tout en assurant un sous-refroidissement en sortie de l'échangeur 2 le micro-contrôleur va commander le détendeur 3 dans le sens de l'ouverture ou de la fermeture. Pour cela, à chaque itération, le micro-contrôleur va calculer le sous-refroidissement à partir de l'écart entre la température de condensation (obtenue par la mesure de la pression *P_{cs1}*) et la température en sortie d'échangeur 2. Si ce sous-refroidissement est inférieur à 3°K et la pression *Pₑₛ₂* supérieure à la valeur prédéterminée, alors le micro-contrôleur va agir sur le détendeur 3 dans le sens de la fermeture. Si ce sous-refroidissement est supérieur à 3°K et la *Pₑₛ₂* inférieure à la valeur prédéterminée, alors le micro-contrôleur va agir sur le détendeur 3 dans le sens de l'ouverture. En allant vers la fermeture du détendeur 3, l'échangeur 2 va se remplir davantage en liquide et la pression *Pₑₛ₁* (et donc la température de condensation) va légèrement augmenter. L'échange de chaleur dans l'échangeur 2 va augmenter provoquant une augmentation de l'énergie soutirée et donc une augmentation du sous-refroidissement. Dans le même temps, la fermeture du détendeur 3 va augmenter la chute de pression entre les pressions *P_{cs1}* et *Pᵢₙₜ* : la diminution de la pression intermédiaire *Pᵢₙₜ* du premier circuit dans l'échangeur 4 va entraîner par là même la pression d'évaporation du second circuit (figure 5). L'ouverture du détendeur 3 provoquera les effets inverses. Dans le même temps, on agira sur le détendeur 5 pour compenser les effets du détendeur 3 au niveau de l'évaporateur, à savoir assurer que le fluide soit totalement évaporé avant d'être aspiré par le compresseur 1.

Il est ainsi possible de maintenir la puissance du système lorsque la température de source chaude augmente et plus encore lorsque la température de la source froide diminue car l'énergie potentielle récupérée par le deuxième étage sur le sous-refroidissement augmente. Lorsque cette énergie potentielle augmente on ouvre le détendeur 3 pour augmenter la pression intermédiaire *Pᵢₙₜ* du premier circuit dans l'échangeur 4 et ainsi augmenter la pression d'évaporation du second circuit et donc la puissance du compresseur 7. De même le rendement global du système est partiellement maintenu car même si le rendement du compresseur 2 diminue en raison de l'augmentation de la température de la source chaude ou de la diminution de température de la source froide ceci est compensé par une proportion plus importante dans le bilan global de l'énergie dissipée par le compresseur 7 via le sous-refroidissement et cela avec un rendement supérieur à celui du compresseur 2.

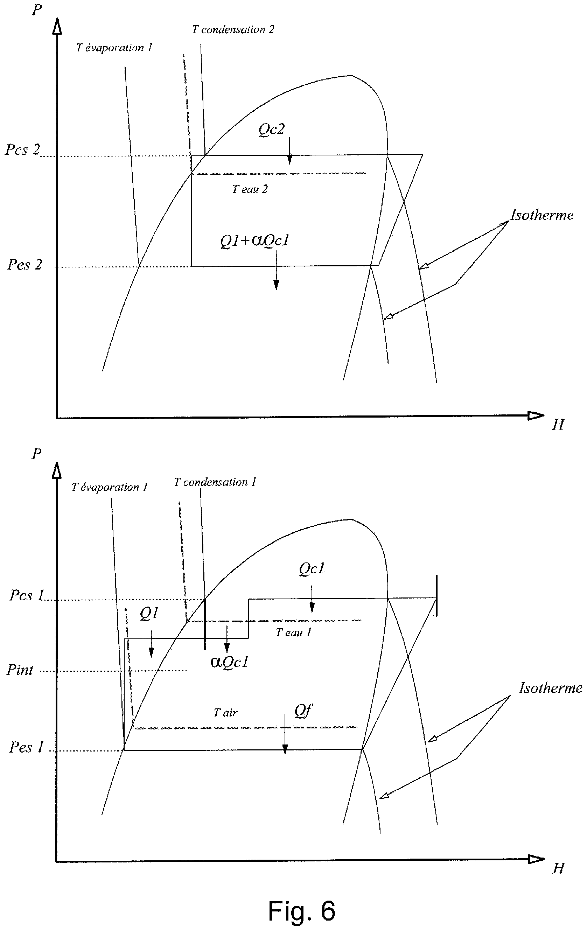

Un autre avantage de la présente invention concerne le cas où les échangeurs 2 et 8 sont en contact avec deux sources chaudes différentes (cas de la figure 4B), ces sources chaudes pouvant être à des températures identiques ou différentes. Dans ce cas, le détendeur 3 va permettre de répartir l'énergie dissipée par le premier étage sur les deux sources chaudes et cela en fonction de leur besoin. Pour assurer les meilleures performances, la source chaude ayant potentiellement la température la plus haute devra être sur l'échangeur 8. Dans le cas où les deux sources chaudes sont à la même température et même si il s'agit d'un mode dégradé par rapport au fonctionnement optimum de la présente invention, le système pourra dissiper une puissance égale à *Q1*+α*Qc1* (cf. figure 6) sur la source chaude en contact avec l'échangeur 8 tout en conservant des performances égales ou supérieures à un système simple étage.

Dans le cas de deux sources chaudes, le micro-contrôleur ne prend plus en compte le critère de sous-refroidissement pour agir sur le détendeur 3 mais uniquement le besoin de puissance sur l'échangeur 8 par rapport au besoin sur l'échangeur 2. Dans le cas extrême où le besoin sur l'échangeur 2 est négligeable devant le besoin en puissance sur l'échangeur 8, le détendeur 3 sera ouvert complètement et l'on se retrouvera dans un fonctionnement bi-étagé. En effet, pour augmenter la puissance (ou énergie) sur l'échangeur 8 l'ouverture du détendeur 3 va être commandée (inversement la fermeture va être commandée pour réduire la puissance). Cette ouverture a pour conséquence une diminution de la pression de condensation dans l'échangeur 2. Cet échangeur va devenir moins puissant en raison de la diminution de l'écart de température entre la température de condensation et la température de la source chaude : la puissance dissipée par l'échangeur 2 va être diminuée d'une quantité α*Qc1* au profit de la puissance transférée dans l'échangeur 4. Dans le même temps l'ouverture du détendeur 3 va provoquer une augmentation de la pression intermédiaire et de la pression d'évaporation du second étage de telle sorte que la puissance froide du second étage corresponde à la puissance transférée dans l'échangeur 4 à savoir *Q1*+α*Qc1.* Dans le cas de deux sources chaudes avec des températures différentes la notion du αₘₐₓ n'existe pas puisque (de) par nature la présente invention est plus performante qu'un système classique. En effet pour des sources chaudes présentant des températures différentes les systèmes actuels travaillent sur la température de la source la plus chaude. En d'autres termes dans les systèmes actuels la totalité de la puissance est portée au potentiel de température le plus haut à savoir la température de la source la plus chaude. Dans la présente invention une partie de la puissance, à savoir *Qc1**(1-α) va être portée à la température de la source la plus froide tandis que l'autre partie de la puissance, à savoir *Q1*+α*Qc1* va être portée au potentiel de température de la source la plus chaude.

Un exemple de conditions de fonctionnement sur une application air/eau de la présente invention utilisant un compresseur au R410A au premier étage et un compresseur au R134a au deuxième étage est donné ci-après.

L'on considère un fonctionnement en mode semi-étagé avec une source chaude à 35°C et imposant à travers la performance des échangeurs une température de condensation de 40°C et une source froide à -7°C imposant une température d'évaporation de -14°C sur le circuit du premier étage, c'est-à-dire une pression relative de condensation de 21.3 Bar (1 Bar = 1.10⁵ Pa) et une pression d'évaporation de 4 Bar.

L'on considère également que le compresseur développe une puissance de 12 kW froid (*Q_{f}*) en mode simple étage. Dans ces conditions, l'énergie *Qc1* est de 17.2 kW (avec sous-refroidissement de 40 à 35°C)et l'énergie de sous-refroidissement Q1 disponible de 5.3 . kW (sous-refroidissement de 40 à 0°C). Si l'on considère un écart de température de 5 °C sur l'échangeur 4, on obtiendra une température d'évaporation de -5°C pour le compresseur du second étage au R134a ou encore une pression d'évaporation de 1.4 Bar. En considérant l'énergie apportée par le compresseur 7, le système développera une puissance de 23.1 kW (*Qc1*+ *Qc2*) pour un COP de 3.15, à comparer avec une puissance de 17.5 kW et un COP de 2.95 en mode simple étage.

Maintenant, lors d'un fonctionnement bi-étagé avec source froide à la même température et une source chaude imposant une température de condensation de 80°C, le compresseur 7 transmettra l'énergie du premier étage pour une température d'évaporation de l'ordre de 30°C (pression de 6.6 Bar) sur le second circuit et une température de condensation du premier circuit de 35°C, point d'équilibre entre les deux circuits.

Au-delà des conditions de fonctionnement, cet exemple montre l'impossibilité du mode semi-étagé en l'absence du détendeur 3 : la température d'équilibre sur l'échangeur 4 en mode bi-étagé serait pratiquement équivalente à celle sur l'échangeur 2 en mode semi-étagé.

Il est à noter que le mode de réalisation présenté figure 4A ou 4B est le mode le moins onéreux.

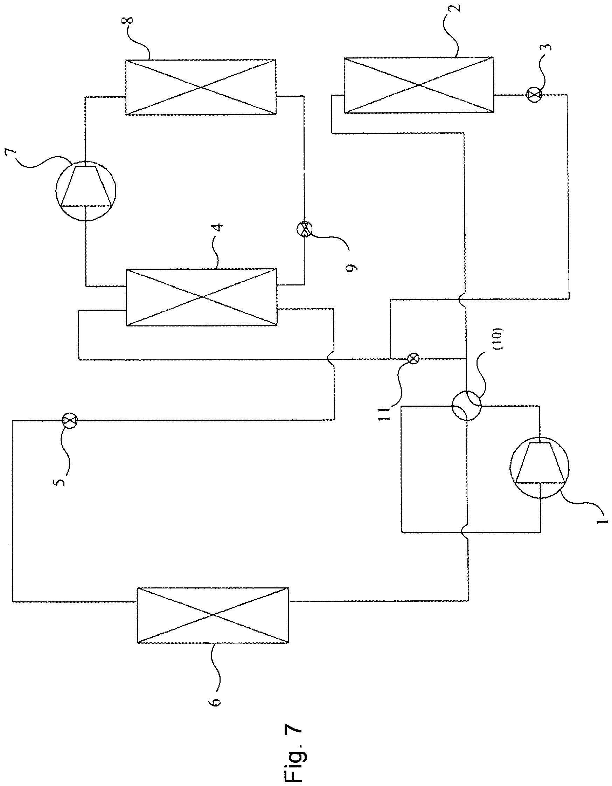

Une amélioration possible de la présente invention est présentée Figure 7. Dans ce mode de réalisation amélioré, pour lequel les sources chaudes n'ont pas été représentées, dans un souci de simplification, la pompe à chaleur selon la présente invention comporte en série sur le premier circuit les composants suivants:
- un compresseur 1, une vanne 4 voies 10, un premier échangeur (ou condenseur) 2, un premier détendeur 3, un deuxième échangeur (ou évapo-condenseur) 4, un second détendeur 5 et un troisième échangeur (ou évaporateur) 6. Ce premier circuit est en contact thermique avec la source chaude (le réseau de chauffage par exemple) via l'échangeur 2 et avec une source froide (air extérieur, source géothermique) via l'échangeur 6 ainsi qu'avec le second circuit via l'échangeur 4. D'autre part une électrovanne 11 est raccordée entre le compresseur 1 et l'échangeur 4 pour pouvoir shunter frigorifiquement l'échangeur 2. Le fluide frigorifique circulant dans ce circuit est de type R410A.

Le second circuit reste inchangé par rapport au mode de réalisation présenté Figure 4, le fluide frigorifique circulant dans ce circuit est de type R134a. Le compresseur 1 est à vitesse variable et le compresseur 7 à vitesse fixe. Ce mode de réalisation présenté Figure 7 est plus particulièrement destiné à une pompe à chaleur application air/eau.

Cette pompe à chaleur permet de répondre à toutes les attentes actuelles avec la possibilité :
- de moduler la puissance dans les trois modes de fonctionnement et plus particulièrement en mode simple étage fortement utilisé lors des périodes où le besoin de puissance est faible et où la température de la source froide est clémente (typiquement les mi-saisons avec une température extérieure de 10 à 15°C).
- d'inverser le cycle sur le premier circuit et donc de dégivrer l'évaporateur lors des fonctionnements avec des températures d'évaporation du premier étage inférieures à zéro mais également de fonctionner en rafraîchissement lors des saisons chaudes.

La présence de l'électrovanne permet lors des fonctionnements en mode bi-étagé de shunter l'échangeur 2 et le détendeur 3 afin de supprimer les pertes de charge induites par ces composants et qui pénalisent le rendement du système dans ce mode.

Les exemples de pompes à chaleur donnés ci-dessus ne doivent pas être considérés comme exhaustifs ou limitatifs de l'invention, qui englobe au contraire toutes les variantes de forme et de configuration qui sont à la portée de l'homme du métier.

On notera en particulier que la pompe à chaleur selon l'invention peut être utilisée avec des sources froides autres que l'air, telles que l'eau, de l'eau glycolée, un capteur solaire, ...

## Revendications

1. Pompe à chaleur, comportant deux circuits montés en cascade, un premier des deux circuits comportant successivement un compresseur (1), un premier dispositif d'échange de chaleur (2) formant condenseur pour ce premier circuit, un deuxième dispositif d'échange de chaleur (4) formant condenseur pour ce premier circuit, un premier dispositif de détente (5) et un troisième dispositif d'échange de chaleur (6) formant évaporateur pour le premier circuit , et le second des deux circuits comportant successivement un compresseur (7), un premier dispositif d'échange de chaleur (8) formant condenseur pour ce second circuit, un dispositif de détente (9) et ledit deuxième dispositif d'échange de chaleur (4), formant évaporateur pour ce second circuit, **caractérisé en ce qu'**un second dispositif de détente (3) est interposé entre le premier dispositif d'échange de chaleur (2) et le deuxième dispositif d'échange de chaleur du premier circuit (4).

2. Pompe à chaleur selon la revendication 1, **caractérisée en ce que** le second dispositif de détente est un détendeur à commande électronique.

3. Pompe à chaleur selon la revendication 2, **caractérisé en ce que** le détendeur est actionné par un moteur pas à pas.

4. Pompe à chaleur selon l'une des revendications 1 à 3, **caractérisée en ce qu'**elle comporte des moyens de commande reliés fonctionnellement au second dispositif de détente pour en régler le degré d'ouverture.

5. Pompe à chaleur selon la revendication 4, **caractérisée en ce que** les moyens de commande sont reliés fonctionnellement à un capteur de pression agencé sur le premier circuit entre le compresseur et le premier dispositif d'échange de chaleur ou une sonde de température agencée dans le premier dispositif d'échange de chaleur, une sonde de température agencée sur le premier circuit entre le premier dispositif d'échange de chaleur et le second dispositif de détente et un capteur de pression agencé sur le second circuit entre le deuxième dispositif d'échange de chaleur et le compresseur.

6. Pompe à chaleur selon la revendication 4, **caractérisée en ce que** le premier dispositif d'échange de chaleur de chacun des circuits est en contact avec une source chaude respective et les moyens de commande sont reliés fonctionnellement à un élément de commande de puissance de chacune des deux sources chaudes.

7. Pompe à chaleur selon l'une des revendications 4 à 6, **caractérisée en ce que** les moyens de commande sont reliés fonctionnellement au premier dispositif de détente pour en régler le degré d'ouverture.

8. Pompe à chaleur selon l'une des revendications 4 à 7, **caractérisée en ce que** les moyens de commande sont en outre reliés fonctionnellement aux compresseurs et adaptés à assurer le fonctionnement sélectif de la pompe dans un mode de fonctionnement simple étage, semi-étagé ou bi-étagé.

9. Pompe à chaleur selon l'une des revendications 4 ou 8, **caractérisée en ce que** les moyens de commande comportent un microcontrôleur.

10. Pompe à chaleur selon l'une quelconque des revendications 1 à 9, **caractérisée en ce que** le premier circuit comporte un passage de dérivation muni d'une électrovanne et dans lequel le fluide caloporteur de ce circuit circule lorsque l'électrovanne est ouverte pour contourner le premier dispositif d'échange de chaleur et le second dispositif de détente de ce premier circuit.

11. Pompe à chaleur selon l'une quelconque des revendications 1 à 10, **caractérisée en ce que** le premier circuit comporte une vanne quatre voies raccordée fluidiquement entre le compresseur et le premier dispositif d'échange de chaleur, de telle manière à pouvoir, par changement de la position de la vanne quatre voies, modifier le sens de circulation du fluide caloporteur.

12. Pompe à chaleur selon l'une quelconque des revendications 1 à 11, **caractérisée en ce qu'**un fluide caloporteur de type frigorigène circule dans chaque circuit.

13. Pompe à chaleur selon la revendication 12, **caractérisée en ce que** le fluide caloporteur du premier circuit est le R410A et le fluide caloporteur du second circuit est le R134a.

14. Pompe à chaleur selon l'une quelconque des revendications 1 à 13, **caractérisée en ce que** le compresseur du premier circuit est à vitesse variable, tandis que le compresseur du second circuit est à vitesse fixe.

15. Pompe à chaleur selon l'une quelconque des revendications 1 à 14, **caractérisée en ce que** la pompe à chaleur est de type air / eau.

16. Procédé de fonctionnement d'une pompe à chaleur selon l'une quelconque des revendications précédentes, assurant le fonctionnement sélectif de cette pompe dans un mode de fonctionnement simple étage, semi-étagé ou bi-étagé, selon lesquels :
- (i) lors du fonctionnement en mode simple étage, le compresseur du premier circuit est en fonctionnement et le compresseur du second circuit est à l'arrêt et le second dispositif de détente du premier circuit est au moins partiellement ouvert,
- (ii) lors du fonctionnement en mode bi-étagé, chacun des compresseurs des premier et second circuits est en fonctionnement et le second dispositif de détente est ouvert complètement ;et
- (iii) lors d'un fonctionnement en mode semi-étagé, chacun des compresseurs des premier et second circuits est en fonctionnement et le second dispositif du premier circuit est commandé en ouverture de telle sorte que l'énergie extraite du premier circuit par le second circuit ne correspond qu'à une énergie de sous-refroidissement lorsque la pompe alimente une seule source chaude ou en fonction des besoins en puissance respectifs de deux sources chaudes, en contact chacune avec l'un ou l'autre du premier dispositif d'échange de chaleur du premier circuit ou du premier dispositif d'échange de chaleur du second circuit.

17. Procédé selon la revendication 16, **caractérisé en ce que** lors du fonctionnement selon le mode (iii) avec une seule source de chaleur, le degré d'ouverture du premier dispositif de détente du premier circuit est réglé de telle sorte que le fluide y circulant soit totalement évaporé avant d'être aspiré par le compresseur de ce premier circuit.
